# EUROPÄISCHE PATENTANMELDUNG

(11) **EP 0 774 508 A2**
(43) Veröffentlichungstag der Anmeldung: **21.05.1997**
(21) Anmeldenummer: 96115391.3
(22) Anmeldetag: 25.09.1996
(51) Int. Cl.: C12C 7/06

(54) **Rührflügelrotor für Maischegefässe**

(30) Priorität: 30.10.1995 DE 29517343 U
(71) Anmelder: Anton Steinecker Maschinenfabrik GmbH, 85356 Freising-Attaching (DE)
(72) Erfinder: Redl, Simon, 84072 Reichertshausen (DE)
(74) Vertreter: Grünecker, Kinkeldey, Stockmair & Schwanhäusser Anwaltssozietät

(57) **Zusammenfassung**

Die Erfindung betrifft einen Rührflügelrotor für Maischegefäße bei der Bierherstellung, der über dem Boden des Maischegefäßes rotierend angeordnet ist, mit mindestens zwei sich radial erstreckenden Rührflügeln, die jeweils mindestens ein schräg angestelltes Flügelprofil aufweisen.

Um eine effektive Durchmischung zu erreichen ist vorgesehen, daß mindestens ein Flügelprofil einen in Drehrichtung vorderen, im wesentlichen parallel zum Boden des Maischegefäßes auslaufenden Flügelabschnitt, einen steiler als der vordere Flügelabschnitt nach oben weisenden mittleren Flügelabschnitt und einen in Drehrichtung hinteren, im wesentlichen parallel zum Boden des Maischegefäßes ausgerichteten Flügelabschnitt aufweist.

## Beschreibung

Die Erfindung betrifft einen Rührflügelrotor für Maischegefäße bei der Bierherstellung, der über dem Boden des Maischegefäßes rotierend angeordnet ist mit mindestens zwei sich radial erstreckenden Rührflügeln, die jeweils mindestens ein schräg angestelltes Flügelprofil aufweisen.

Derartige Rührflügelrotoren werden in Maischegefäßen, z.B. Maischebottichen und Maischepfannen, bei der Bierherstellung eingesetzt. Während des Maischens wird die eingelagerte Maische mit Hilfe des Rührflügelrotors durchgemischt, indem dieser rotierend von einem Motor, der außerhalb des Maischegefäßes angeordnet ist, angetrieben wird. Der Rührflügelrotor ist nahe dem Boden des Maischegefäßes angeordnet.

Gemäß dem Stand der Technik (vgl. z.B. Steinecker-Prospekt 3/95 "Maischgefäße") werden die einzelnen Rührflügelprofile des Rührflügelrotors schräg angestellt an der Achse des Rotors befestigt, um eine bessere Durchmischung der Maische zu erreichen. Der Querschnitt eines derartigen Flügelprofils hat dabei etwa die Form eines Viertelkreises. Im achsennahen Bereich des Flügelprofiles ist dieser annähernde Viertelkreis derart angeordnet, daß seine konkave Seite in Drehrichtung des Rotors nach vorne zeigt und auf diese Weise die Maische bei Drehbewegung nach unten ablenkt. Diese Anordnung erfordert eine beabstandete Anordnung des Rührflügelrotors in Bezug zum Maischegefäßboden, da sich sonst die Maische unterhalb des Flügelprofiles aufstauen würde. Im speziellen beim Maischen von dicker Maische ist deswegen die Durchmischung in der Mitte des Maischegefäßes unzufriedenstellend. Insbesondere in den Abschnitten der Flügelprofile mit größerem radialen Abstand von der Achse des Rührflügelrotors entsteht auch eine hohe Beanspruchung durch die Scherkräfte, die durch das im wesentlichen viertelkreisförmige Flügelprofil erzeugt werden, wenn der Rührflügelrotor sich durch die Maische bewegt.

Der im wesentlichen viertelkreisförmige Querschnitt des Flügelprofiles bedeutet, daß der in Drehrichtung hintere Abschnitt des Flügelprofiles im wesentlichen in Richtung zum Boden des Maischegefäßes zeigt und somit senkrecht zur Bewegungsrichtung des Rotors ausgerichtet ist. Dadurch können bei der Bewegung des Rotors durch die Maische am hinteren Ende des Flügelprofiles Abrißwirbel und an der Achse des Rotors Tromben entstehen, die der Maische schaden. Zudem wird durch das Richtung Boden des Maischegefäßes zeigende Ende des Flügelprofiles großer Druck auf die Maische ausgeübt, so daß die Maische verstärkt Scherkräften ausgesetzt wird, die der Maische schaden können und ihre Viskosität erhöhen, was im darauffolgenden Abläuterprozeß zu Läuterproblemen führt.

Aufgabe der Erfindung ist es daher, einen Rührflügelrotor der eingangs genannten Art anzugeben, der eine effektive und trotzdem schonende Durchmischung der Maische ermöglicht und einen einfachen konstruktiven Aufbau besitzt.

Gelöst wird diese Aufgabe dadurch, daß das mindestens eine Flügelprofil einen in Drehrichtung des Rührflügels vorderen, im wesentlichen parallel zum Boden des Maischegefäßes auslaufenden vorderen Flügelabschnitt, einen steiler als der vordere Flügelabschnitt nach oben weisenden mittleren Flügelabschnitt und einen in Drehrichtung hinteren, im wesentlichen parallel zum Boden des Maischegefäßes ausgerichteten Flügelabschnitt aufweist.

Durch den in Drehrichtung vorderen Flügelabschnitt wird gewährleistet, daß die Maische schonend vom Boden abgehoben wird, der mittlere Flügelabschnitt führt die Maische nach oben und der in Drehrichtung hintere Flügelabschnitt gewährleistet eine annähernd wirbelfreie Ablösung der Maische von dem Flügelprofil.

Es entstehen keine Stauungen der Maische unterhalb der Rührflügel, da die Maische durch die Flügelprofile nach oben bewegt wird. Der erfindungsgemäß geformte Rührflügelrotor kann daher nahe am Maischegefäßboden rotieren,so daß effektive Durchmischung der Maische gewährleistet wird. Da sich durch den im wesentlichen parallel zum Maischegefäßboden auslaufenden hinteren Abschnitt des Flügelprofils annähernd keine Wirbel bilden, wird die Maische schonend durchrührt. Es entstehen auch im äußeren Bereich der Rührflügel keine erhöhten Scherkräfte. Die Maische wird also keinen Kräften ausgesetzt, die ihr schaden könnten oder eine unerwünschte Erhöhung ihrer Viskosität hervorrufen würden. Die Flügelprofile des erfindungsgemäßen Rührflügelrotors lassen sich z.B. einfach durch Biegen entsprechender Metallbleche herstellen.

In vorteilhafter Ausgestaltung der Erfindung haben die Querschnitte der Flügelprofile die Form eines auseinandergezogenen Z's oder eines auseinandergezogenen S's.

Vorteilhafterweise wird jeder Rührflügel mit mindestens zwei beabstandet übereinander angeordneten Flügelprofilen ausgestattet. Eine derartige Anordnung führt zu einer verbesserten Durchmischung und besseren Führung der Maische, wenn sich die Rührflügel durch die Maische bewegen.

In weiterer Ausgestaltung sind die vorderen Kanten der vorderen Abschnitte der höheren Flügelprofile in Drehrichtung des Rührflügelrotors nach vorne versetzt angeordnet, um die Durchmischung weiter zu verbessern.

Vorteilhaft ist es, wenn jeder Rührflügel zusätzlich mindestens eine vertikal ausgerichtete Verteilerplatte aufweist. Diese Verteilerplatten erhöhen die Stabilität des Rührflügels und verbessern das Rühren der Maische.

Vorteilhaft ist weiterhin, wenn die vertikalen Verteilerplatten schräg zur radialen Richtung des Rührflügelrotors ausgerichtet sind, so daß sich bei der Rotationsbewegung des Rührflügelrotors eine zusätzliche radiale Kraft auf die Maische ausbildet.

Vorteilhaft sind die vertikalen Verteilerplatten derart schräg ausgerichtet, daß der in Drehrichtung des Rührflügelrotors vordere Teil näher an der Rotorachse angeordnet ist als der in Drehrichtung des Rührflügelrotors hintere Teil. Eine derartige vertikale Verteilerplatte übt bei der Bewegung des Rührflügelrotors durch die Maische eine radiale Kraft nach außen auf die Maische aus, so daß es nicht zur Ansammlung der Maische im Zentrum des Maischegefäßes kommen kann.

Weiterhin ist es vorteilhaft, wenn die vertikalen Verteilerplatten, für den Fall daß mehrere Flügelprofile übereinander angeordnet sind, zwischen diesen angeordnet sind. Diese Anordnung verbessert weiterhin die Stabilität der Rührflügel und die Durchrührung der Maische bei der Bewegung des Rührflügelrotors durch die Maische.

In weiterer vorteilhafter Ausgestaltung sind die einzelnen Kanten der Flügelprofile abgeschrägt, so daß sich bei der Bewegung der Flügelprofile durch die Maische der Maische keine senkrechten Kanten entgegenstellen, und diese unerwünscht starken Kräften aussetzen.

In vorteilhafter Weise sind die Flügelprofile derart geneigt zur Rotorachse angebracht, daß ihre äußeren Enden höher liegen als ihr achsennaher Bereich, so daß sich der Rotor an die Form des Maischegefäßes anpaßt. Nur im Falle eines ebenen Gefäßbodens besteht zwischen den Rührflügeln und der Achsenrichtung ein rechter Winkel. Die Rührflügel bewegen sich also immer über ihre gesamte Länge in unmittelbarer Nähe des Maischegefäßbodens.

Die Erfindung wird im folgenden anhand der Zeichnungen näher erläutert.

Es zeigen:
- Figur 1: eine schematische Darstellung eines Maischegefäßes mit einem Rührflügelrotor,
- Figur 2: eine Seitenansicht eines erfindungsgemäßen Rührflügelrotors,
- Figur 3: eine Draufsicht auf den Rührflügelrotor der Figur 2,
- Figur 4: eine perspektivische Ansicht auf einen Teil eines erfindungsgemäßen Rührflügelprofiles,
- Figur 5: eine Ansicht in Pfeilrichtung A-A der Figur 2,
- Figur 6: eine Ansicht wie Figur 5 auf eine andere Ausführungsform der Anordnung zweier übereinander angeordneter Flügelprofile,

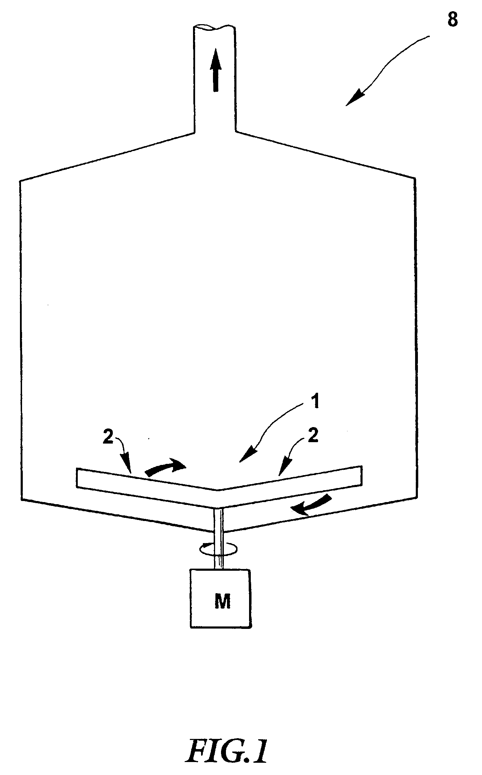

In Figur 1 ist schematisch ein Maischegefäß 8, z.B. ein Maischebottich oder eine Maischepfanne, wie es bei der Bierherstellung verwendet wird, gezeigt. Am Boden des Gefäßes 8 bewegt sich ein Rührflügelrotor 1, der von einem Motor M außerhalb des Maischegefäßes angetrieben wird. Der Rührflügelrotor 1 hat einzelne Rührflügel 2, die die Maische durchmischen.

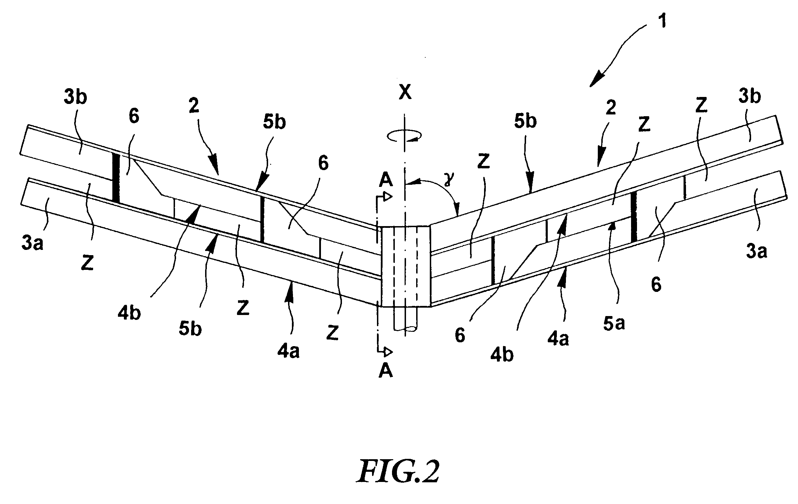

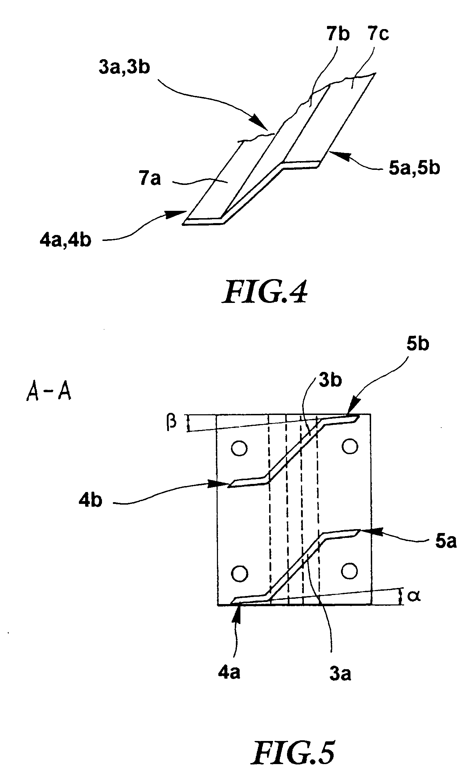

Figur 2 zeigt einen Rührflügelrotor 1 entsprechend einer bevorzugten Ausführungsform der vorliegenden Erfindung. Der Rotor wird um eine Achse X gedreht. Die einzelnen Rührflügel 2 bilden mit der Achse X einen Winkel γ, der sich aus der Geometrie des Maischgefäßbodens ergibt, derart, daß die Rührflügel über ihre ganze Länge möglichst nahe am Boden des Maischegefäßes 8 rotieren. Im Falle eines ebenen Maischegefäßbodens beträgt daher der Winkel γ 90°. Ist der Boden des Gefäßes, wie es häufig bei Maischegefäßen der Fall ist, zur Achse hin abfallend, so entspricht der Winkel γ diesem Abfall des Gefäßbodens. Ein Rührflügel 2 besteht gemäß der bevorzugten Ausführungsform aus zwei Rührflügelprofilen 3a und 3b, die einen Querschnitt haben, wie er in Figur 4 ersichtlich ist. Jedes Flügelprofil besteht aus in Drehrichtung vorderen, mittleren und hinteren Flügelabschnitten 7a, 7b, 7c, die im Querschnitt ein auseinandergezogenes Z's darstellen. Der vordere Abschnitt 7a ist, wie z.B. in Figur 5 gezeigt, um den Winkel α gegen den Maischegefäßboden geneigt, wobei der Winkel α ein kleiner Winkel in der Größenordnung von 5° sein kann. Dieser vordere Flügelabschnitt 7a bewirkt ein vorsichtiges Anheben der Maische vom Maischeboden, bevor der steiler angestellte mittlere Flügelabschnitt 7b die Maische nach oben bewegt, während sich der Rührflügel durch die Maische fortbewegt. Der wiederum flachere hintere Abschnitt 7c eines Flügelprofiles bewirkt eine annähernd wirbelfreie Ablösung der Maische vom Rührflügelprofil. Der hintere Abschnitt 7c der Rührflügelprofile ist um einen Winkel β gegen die Horizontale geneigt, welcher wieder ein kleiner Winkel in der Größenordnung von 5° sein kann. Die Kanten 4a, 4b, 5a, 5b sind zusätzlich abgeschrägt, so daß bei der Bewegung des Rührflügels durch die Maische keine senkrechten Kanten auf die Maische treffen. Diese Maßnahmen bewirken eine schonende Durchmischung der Maische ohne daß unerwünschte große Scherkräfte entstehen. Dadurch, daß der in Drehrichtung vordere Flügelabschnitt 7a über die ganze Länge der Rührflügel 2 nahezu parallel zum Maischegefäßboden auslaufend angeordnet ist und die Maische durch die Rührflügelprofile 3a, 3b nach oben angehoben wird, kann der Rührflügelrotor 1 sehr nahe am Maischegefäßboden angeordnet sein, so daß eine effektive Durchmischung möglich ist. Es können auch nicht, wie im Stand der Technik, Stauungen unterhalb der Rührflügelprofile auftreten.

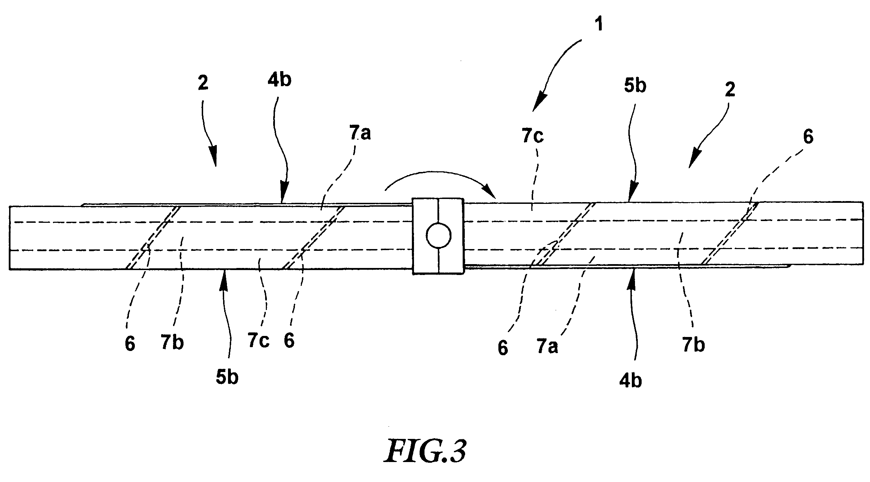

Wie weiterhin aus Figur 2 ersichtlich ist, besitzt das bevorzugte Ausführungsbeispiel je Rührflügel 2 zwei vertikal ausgerichtete Verteilerplatten 6, die in Bewegungsrichtung schräg ausgerichtet sind, wie es in Figur 3 deutlich wird. Diese schrägen vertikal ausgerichteten Verteilerplatten 6 bewirken bei der Bewegung des Rührflügelrotors 1 eine radiale Kraft auf die Maische, was die Durchmischung erhöht und Stauungen im Zentrum des Maischegefäßes verhindert. Zudem wird die gegenseitige Stabilität der unteren und oberen Flügelprofile 3a und 3b erhöht.

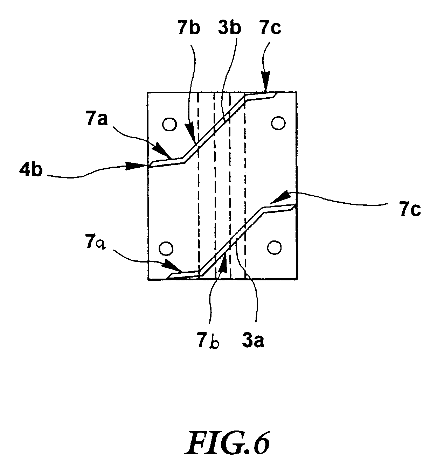

In Figur 5 ist eine mögliche Anordnung zweier übereinander angeordneter Rührflügelprofile 3a und 3b gezeigt, entsprechend einem Schnitt A-A in Figur 2. Eine andere mögliche Anordnung übereinander angeordneter Rührflügelprofile zeigt Figur 6, in der das obere Flügelprofil 3b zusätzlich gegenüber dem unteren Flügelprofil 3a nach vorne versetzt ist, so daß die vordere Kante 4b des vorderen Abschnitts des oberen Flügelprofils 3b in Drehrichtung nach vorne versetzt ist, um die Führung der Maische zu optimieren.

Während des rotierenden Betriebs des Rührflügelrotors tritt die Maische durch die Zwischenräume Z, die durch die oberen und unteren Flügelprofile 3b und 3a und den vertikalen Verteilerplatten 6 gebildet werden. Dabei wird die Maische durch die vorderen Flügelabschnitt 7a vorsichtig angehoben und durch die mittleren Flügelabschnitte 7b nach oben bewegt, bevor sie von dem hinteren Flügelabschnitt 7c annähernd wirbelfrei ablöst.

## Patentansprüche

1. Rührflügelrotor für Maischegefäße bei der Bierherstellung, der über dem Boden des Maischegefäßes rotierend angeordnet ist, mit mindestens zwei sich radial erstreckenden Rührflügeln, die jeweils mindestens ein schräg angestelltes Flügelprofil aufweisen,
**dadurch gekennzeichnet**, daß
das mindestens eine Flügelprofil (3a, 3b) einen in Drehrichtung vorderen, im wesentlichen parallel zum Boden des Maischegefäßes auslaufenden Flügelabschnitt (7a), einen steiler als der vordere Flügelabschnitt nach oben weisenden mittleren Flügelabschnitt (7b) und einen in Drehrichtung hinteren, im wesentlichen parallel zum Boden des Maischegefäßes ausgerichteten Flügelabschnitt (7c) aufweist.

2. Rührflügelrotor nach Anspruch 1, **dadurch gekennzeichnet**, daß das mindestens eine Flügelprofil (3a, 3b) im Querschnitt die Form eines auseinandergezogenen Z's oder S's hat.

3. Rührflügelrotor nach einem der vorangegangenen Ansprüche, **dadurch gekennzeichnet**, daß jeder Rührflügel (2) mindestens zwei beabstandet übereinander angeordnete Flügelprofile (3a, 3b) aufweist.

4. Rührflügelrotor nach Anspruch 3, **dadurch gekennzeichnet**, daß die vorderen Abschnitte der höheren Flügelprofile (3b) vordere Kanten (4b) aufweisen, die in Drehrichtung des Rührflügelrotors (1) nach vorne versetzt angeordnet sind.

5. Rührflügelrotor nach einem der vorangegangenen Ansprüche, **dadurch gekennzeichnet**, daß jeder Rührflügel (2) zusätzlich mindestens eine vertikale Verteilerplatte (6) aufweist.

6. Rührflügelrotor nach Anspruch 5, **dadurch gekennzeichnet**, daß die vertikalen Verteilerplatten (6) schräg zur radialen Richtung des Rührflügelrotors (1) ausgerichtet sind.

7. Rührflügelrotor nach Anspruch 6, **dadurch gekennzeichnet**, daß die vertikalen Verteilerplatten (6) derart schräg ausgerichtet sind, daß der in Drehrichtung des Rührflügelrotors (1) vordere Teil der vertikalen Verteilerplatten (6) näher an der Rotorachse (X) angeordnet ist als der in Drehrichtung des Rührflügelrotors (1) hintere Teil.

8. Rührflügelrotor nach den Ansprüchen 4 und 6, **dadurch gekennzeichnet**, daß die vertikalen Verteilerplatten (6) zwischen den übereinander angeordneten Flügelprofilen (3a, 3b) angeordnet sind.

9. Rührflügelrotor nach einem der vorangegangenen Ansprüche, **dadurch gekennzeichnet**, daß die Kanten (4a, 4b, 5a, 5b) der Flügelprofile (3a, 3b) abgeschrägt sind.

10. Rührflügelrotor nach einem der vorangegangenen Ansprüche, **dadurch gekennzeichnet**, daß die Rührflügel (2) nach oben geneigt an der Achse (X) des Rührflügelrotors (1) angebracht sind.
